Europäisches Patentamt

European Patent Office

Office européen des brevets

(11) Publication number: **0 330 321**
**A2**

## EUROPEAN PATENT APPLICATION

(21) Application number: **89300975.3**

(22) Date of filing: **01.02.89**

(51) Int. Cl.⁴: **G01P 3/486** , **G01P 13/04**

(30) Priority: **10.02.88 GB 8803083**

(43) Date of publication of application:
**30.08.89 Bulletin 89/35**

(84) Designated Contracting States:
**AT BE CH DE ES FR GB GR IT LI LU NL SE**

(71) Applicant: **THORN EMI plc**
**4 Tenterden Street**
**London W1R 9AH(GB)**

(72) Inventor: **Keens, Andrew Peter**
**19, Gresham Road**
**Hillington Middlesex, UB10 0HT(GB)**

(74) Representative: **Marsh, Robin Geoffrey et al**
**Thorn EMI Patents Limited The Quadrangle**
**Westmount Centre Uxbridge Road**
**Hayes Middlesex, UB4 0HB(GB)**

(54) **Tachometer.**

(57) A tachometer which is effective, simple and cheap to construct comprises of a disc bearing reflective radial graticule markings and co-mounted laser light source and photodetector. Light from the laser diode is focused on to the graticule area of the disc, which can be mounted to the rotary drum of an optical tape recorder. Light reflected from the graticule area is passed to the photodecector which generates an output signal indicative of the rate at which the disc is rotating. The source, photodetector and focussing system may conveniently be similar to those used in compact disc technology.

FIG.1

EP 0 330 321 A2

## TACHOMETER

The present invention relates to a tachometer for use in an optical system.

Conventional optical tachometers use broad band incoherent light sources, such as filament bulbs or light emitting diodes, and hence have comparatively low resolution.

Semiconductor lasers, which are typically used in communications and compact disc technology, have laser diodes incorporating "pin" photodiodes to produce power monitor signals used by the driving circuitry to maintain a constant output power.

In accordance with the present invention, this photodiode facility is utilised to provide a tachometer signal which can be utilised to monitor and, if necessary, control the speed of rotation of a rotatable component.

In order that the invention may more readily be understood, a description is now given, by way of example only, reference being made to the accompanying drawings, in which:-

Figure 1 is a schematic diagram of the optical elements of an optical tachometer in accordance with one example of the invention;

Figure 2 shows, schematically, patterning on an encoder disc;

Figure 3 shows, schematically, a circuit intended to take advantage of a combined laser and photodiode detector to generate tachometer signals;

Figure 4 shows a practical implementation of the circuit shown schematically in Figure 3;

Figure 5 shows an implementation of the present invention especially suited to a helically scanned optical tape recorder system;

Figure 6 illustrates use of an elliptical spot at the encoder; and

Figure 7 illustrates an elliptical beam output from a laser diode.

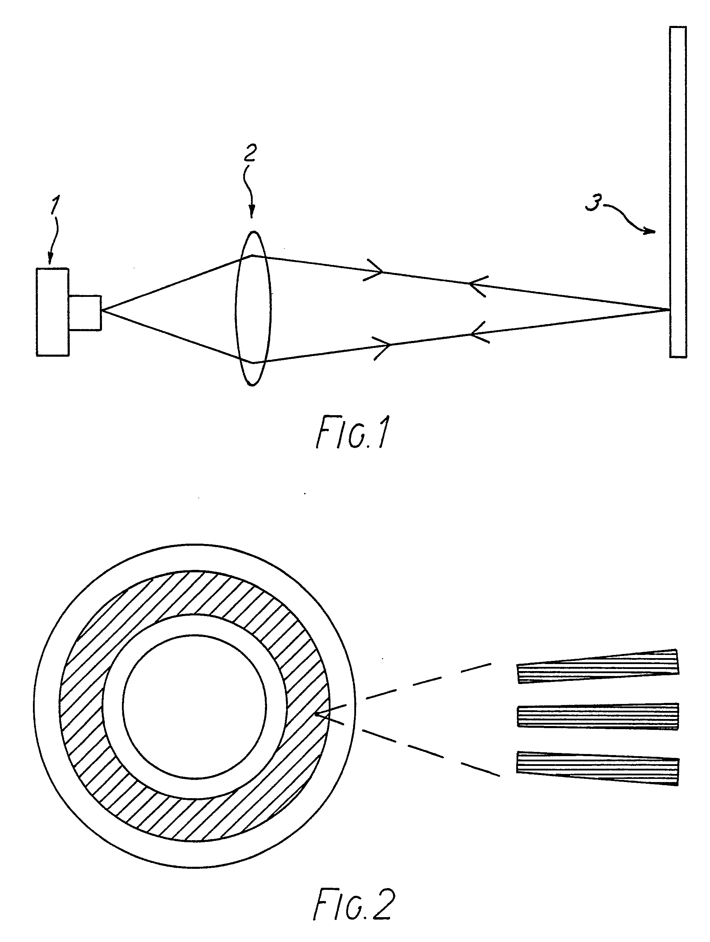

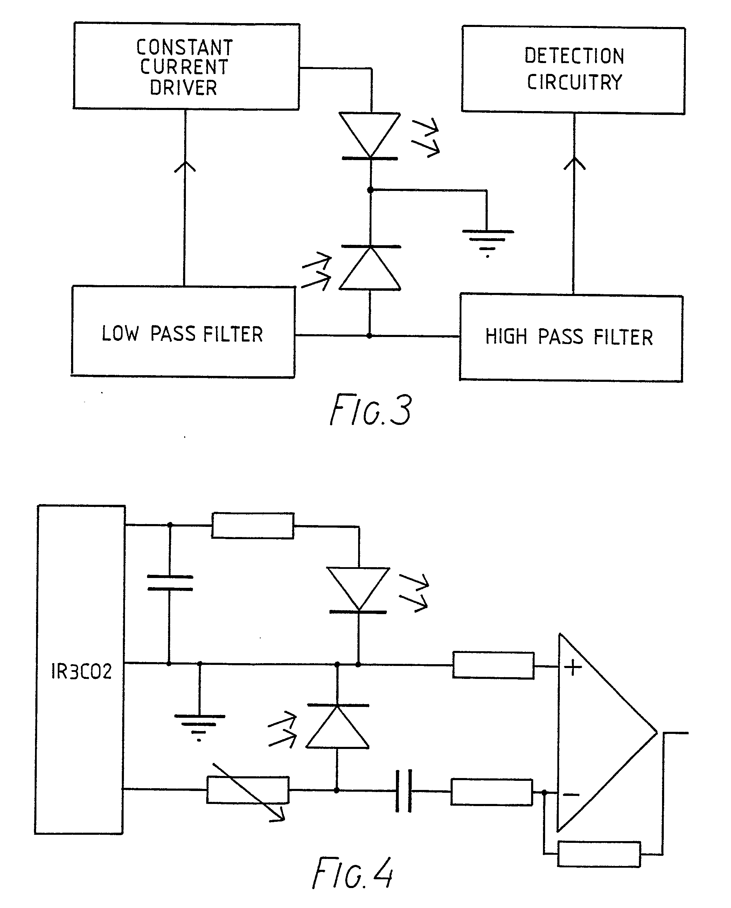

Figure 1 shows, schematically, a very simple optical tachometer using cheap and readily available components. The light from a laser source 1 is collected and focussed by a simple lens 2, conveniently of the kind used in compact disc players. The light is focussed onto an encoder disc 3 which is provided with a pattern of radial reflective strips (see Figure 2). The reflected light is again collected by the lens 2 and focussed, via the laser cavity, onto a "PIN" photodiode, not shown, incorporated in the laser source, as previously mentioned.

The electrical signal derived from the pin photodiode has a low frequency component due to power variations in the laser diode output and a high frequency component resulting from the modulated back reflected light. These signals are separated (see Figure 3) using high and low pass filters, and the power monitor signal, derived from the low-pass filter, is then used in conventional manner to influence the drive to the laser diode. Such a system may be implemented (see Figure 4) using the Sharp LT022 laser diode and photodiode construction, a moulded compact disc lens, the IR3C02 driver chip, and a high speed operational amplifier. A capacitor placed across the output of the driver chip acts as the low pass filter. The aforementioned operational amplifier is connected across the photo diode of the LT022 construction and is used in a conventional feedback format to provide high pass filtering and signal amplification.

The mechanism described hereinbefore does not constitute conventional optical feedback, and the laser needs to operate well beyond its threshold if it is desired to avoid this phenomenon. The utilisation of optical feedback, essentially using the arrangement of lens 2 and a mirror (comprising the reflective strips of encoder disc 3) to extend the laser cavity, does provide an alternative mechanism. In this case the reflected signal is considerably amplified, and the output power of the laser itself is strongly modulated. The resulting tachometer signal does, however, tend to be susceptible to noise and to be vibration sensitive, so limiting the utility of this technique. (The use of optical feedback for signal monitoring is described by Y. Mitsuhashi et al in Volume 18, number 1, pp 95-97, April 1976 edition of Optics Communications).

Since the laser diode and photodetector are effectively coincident, the system requires no beam splitters. The photodiode and laser are conjugate with the point of reflection at the encoder disc. Therefore the system is substantially immune to angular misalignment of the encoder disc, except for vignetting at the lens.

If the disc is not flat, and/or if the shaft on which it is mounted is susceptible to axial runout, then the disc can be displaced from focus. This is acceptable provided the depth of focus of the optical system is not exceeded. It is considered unduly complex to include compact disc type focus control, and it is preferred to ensure that a sufficient depth of focus exists, even at the expense of a reduction in optical resolution. In most applications where high resolution is required, such as in an optical tape recorder, the axial runout of the shaft and flatness of the encoder disc will, in any event, already be highly toleranced.

The arrangement of the present invention offers a much simpler alignment procedure than conventional optical tachometers, as it is not necessary to align, and accurately space, two discs. Provided the encoder disc is suitably orthogonal to the axis of rotation, the only critical alignment is the focus. This can be adjusted by moving either the lens or the laser diode, and may be done whilst the shaft is rotating by observing the output signal strength. In low resolution systems, with large depths of focus, even this setting up may not be necessary.

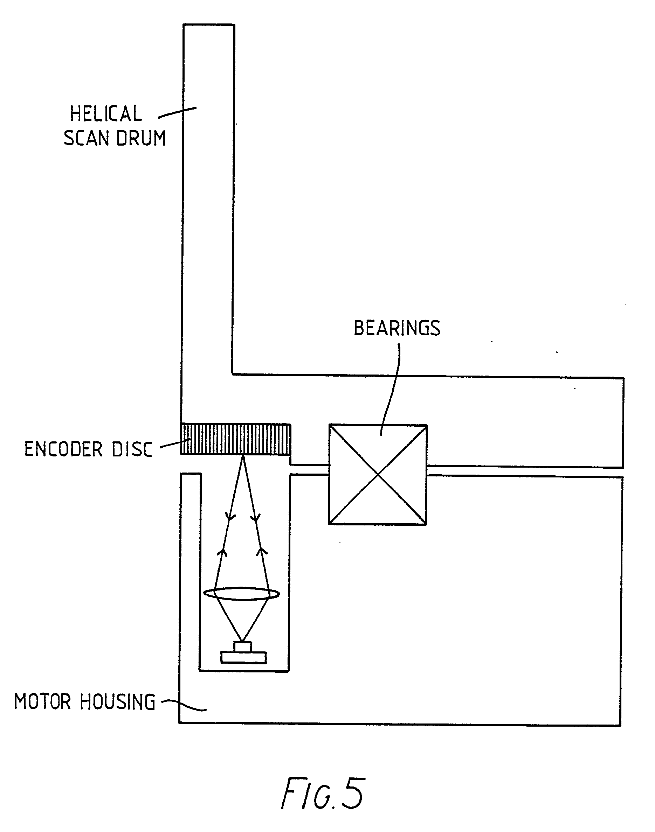

Another advantage over conventional optical tachometers is that the optical components on one side of the encoder disc. In an optical tape recorder this allows the encoder disc to be bonded onto the base of the drum (see Figure 5) around which the tape is wrapped.

The speed of response, and hence temporal resolution, of this system is theoretically limited only by the characteristics of the "pin" photodiode. Thus the Sharp LTO22 laser and photodiode pair can cope with frequencies of 300 MHz or more. For a shaft rotating at 9000 rpm, this allows in principle a digital resolution of better than 1 second of arc. In practice, a lower limit is placed on the system by the high frequency amplifier.

The optical resolution of the system is determined primarily by the size of the encoder disc and the spot size at the disc surface. Clearly, a larger diameter disc has, for a fixed angular spacing, a greater line width than does a smaller diameter disc. For a 70 mm diameter disc with 10,000 lines, the line spacing at the circumference is about 20um.

The spot size at the surface of the disc is determined by the image quality, and image space numerical aperture of the lens. For an 800nm laser diode the theoretical limit is 0.5um. In general a spot size similar to the encoder line width is the most useful.

The choice of spot size can have a significant effect on the modulation of the output signal. If the spot size is greater than the encoder line width this takes the form of an attenuation of the signal. If the spot size is very much smaller than the line width a square wave output is produced, as opposed to the sinusoidal output of the spot matched to the line width. The sinusoidal waveform provides more information as regards position than the square waveform.

Directional information may also be added to the output signal. For example a "saw tooth" reflectivity profile may be used on the encoder disc in place of the simple "on" or "off" strips. Such information however is not of great utility as the system does not operate well around d.c.

The use of a larger rather than a smaller spot also offers other advantages such as a greater depth of focus, and a degree of immunity from dust and scratching, due to the larger surface area used for reflection. A similar noise immunity applies to the edge definition of the lines on the encoder disc.

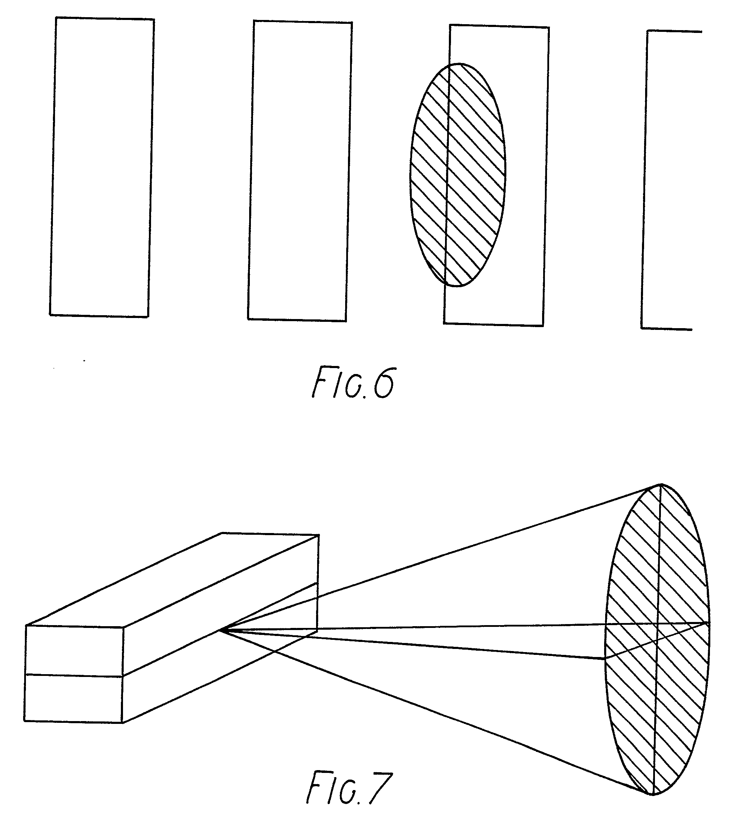

The same noise immunity can be achieved without loss of resolution by expanding the spot size axially relative to the encoder disc (see Figure 6). This may be achieved by anamorphic optics, or by utilizing the inherent oval output profile of many laser diodes (see Figure 7).

The present invention provides a high speed, high resolution digital optical tachometer using cheap and readily available compact disc technology components, together with a simple encoder disc. The system exhibits other advantages such as high noise immunity, and adaptable signal modulation. The alignment of the device is relatively simple, and can be performed whilst the shaft is rotating to maximise the signal strength.

## Claims

1. An optical tachometer comprising a laser diode source and a photo diode detector mounted so as to be substantially co-sited, lens means for directing radiation emitted from the source on to a variably reflective graticule rotatable relative to the source and detector by a device whose speed of operation the tachometer is desired to indicate, and for directing radiation, reflected from said graticule and modulated by its variable reflectivity, toward said photo detecting diode, and circuit means for selecting, from electrical output signals generated by said detector, signal components having a characteristic indicative of said modulation.

2. A tachometer according to claim 1 including means for utilising the said selected signal components to monitor and, if necessary, control the rotational speed of said device.

3. A tachometer according to either of Claims 1 or 2 wherein said circuit means includes an operational amplifier coupled across said detector and having a feedback connection arranged to permit the amplifier to operate effect high-pass filtering.

4. A tachometer according to any preceding claim wherein said device comprises a rotatable drum of a tape recording and/or reproducing instrument and said graticule is formed on said drum.

5. A tachometer according to any preceding claim wherein said graticule comprises a pattern of radial reflective strips disposed in an annular region of a substantially flat support surface.

*FIG.1*

*FIG.2*

FIG.3

FIG.4

HELICAL
SCAN DRUM

BEARINGS

ENCODER DISC

MOTOR HOUSING

FIG.5

FIG.6

FIG.7